# EUROPEAN PATENT APPLICATION

(11) **EP 2 743 755 A1**
(43) Date of publication of application: **18.06.2014**
(21) Application number: 13186984.4
(22) Date of filing: 01.10.2013
(51) Int. Cl.: G02F 1/1335

(54) **Display panel and display apparatus having the same**

(30) Priority: 11.12.2012 KR 20120143382
(71) Applicant: Samsung Electronics Co., Ltd, Gyeonggi-do 443-742 (KR)
(72) Inventor: Chung, Seong-eun, Seoul (KR); Kim, Dong-hwan, Seoul (KR); Jung, Il-Yong, Gyeonggi-do (KR); Kim, Tae-bae, Gyeonggi-do (KR); Lee, Dong-jun, Chungcheongnam-do (KR)
(74) Representative: Misselbrook, Paul

(57) **Abstract**

A display panel of a display apparatus including the display panel and a backlight unit configured to provide light to the display panel, the display panel including: an upper substrate; a lower substrate; a liquid crystal layer between the upper substrate and the lower substrate; a wire grid polarizer (WGP) provided on at least one from among the lower substrate and the upper substrate and configured to filter light radiated from the backlight unit; and an antireflection layer provided on the upper substrate and configured to substantially prevent reflection of external light from an external source on a surface of the upper substrate. The WGP may include a light absorption layer configured to absorb the external light which passes through the antireflection layer.

## Description

### BACKGROUND

### 1. Field

Apparatuses and methods consistent with exemplary embodiments relate to a display panel which displays an image thereon and a display apparatus having the same, and more particularly, to a display panel which displays an image by light provided from a backlight unit and has reduced interference of perception of the image displayed thereon due to reflection of external light on a surface of the panel and a display apparatus having the same.

### 2. Description of the Related Art

A display apparatus includes a display panel for displaying images according to broadcast signals or various formats of image signals or image data and may include, for example, a television (TV), a monitor, or the like. The display panel may be configured as various types, such as, for example, a liquid crystal display (LCD) panel, a plasma display panel (PDP), or the like and may be employed in a variety of display apparatuses. Here, when an LCD panel that does not generate light by itself is adopted as a display panel, a display apparatus includes a backlight unit which generates and provides light to the display panel.

When users perceive images displayed on the display apparatus with the foregoing configuration, perception of the images may be disturbed due to several factors. One of the factors is a glare phenomenon such that a surface of the display panel, on which images are displayed, is undesirably shining or bright due to reflection of external light from outside on the display panel. The glare phenomenon becomes serious when the external light has a greater quantity, and when the glare phenomenon becomes severe, users may hardly see images displayed on the panel. To reduce the glare phenomenon, it is favorable that an external environment of the display panel has substantially no external light. However, it is difficult to exclude the external light from the external environment of the display panel. Therefore, a technique for reducing a quantity of external light reflected on the surface of a display panel is needed for a display panel and a display apparatus including the same.

### SUMMARY

Exemplary embodiments may address at least the above problems and/or disadvantages and other disadvantages not described above. Also, the exemplary embodiments are not required to overcome the disadvantages described above, and an exemplary embodiment may not overcome any of the problems described above.

According to an aspect of an exemplary embodiment, there is provided a display panel of a display apparatus including the display panel and a backlight unit configured to provide light to the display panel, the display panel including: an upper substrate; a lower substrate; a liquid crystal layer between the upper substrate and the lower substrate; a wire grid polarizer (WGP) provided on at least one from among the lower substrate and the upper substrate and configured to filter light radiated from the backlight unit; and an antireflection layer provided on the upper substrate and configured to substantially prevent reflection of external light on a surface of the upper substrate, wherein the WGP includes a light absorption layer configured to absorb the external light which passes through the antireflection layer.

The WGP may further include a grid layer including at least one of a metal layer and a dielectric layer, wherein the light absorption layer may be provided on the grid layer.

The absorption layer may include at least one material from among AlAs, GaAs, InGaAs, GaP, InP, GaN, InN, CdTe, Ni-P, carbon nanotube, Ag2S, and Cr203.

The antireflection layer may include an embossed pattern in a scale of nano meters.

The antireflection layer may include at least one material from among silicone, ultraviolet (UV)-curable silicone, and photoresist.

The display panel may further include a color filter layer provided on one of the upper substrate and the lower substrate.

The WGP may include at least one from among a lower polarizer provided between the lower substrate and the liquid crystal layer and an upper polarizer provided between the liquid crystal layer and the upper substrate. The at least one from among the lower polarizer and the upper polarizer may have a pitch determined based on a wavelength of light of a color to be displayed by light filtered therethrough.

According to an aspect of another exemplary embodiment, there is provided a display apparatus including: a signal reception unit configured to receive an image signal; a signal processing unit configured to process the image signal received by the signal reception unit; a display panel configured to display an image based on the image signal processed by the signal processing unit; and a backlight unit configured to generate and provide light, wherein the display panel includes: an upper substrate; a lower substrate; a liquid crystal layer between the upper substrate and the lower substrate; a wire grid polarizer (WGP) provided on at least one from among the lower substrate and the upper substrate and configured to filter light radiated from the backlight unit; and an antireflection layer provided on the upper substrate and configured to substantially prevent reflection of external light from an external source on a surface of the upper substrate, wherein the WGP includes a light absorption layer configured to absorb the external light which passes through the antireflection layer.

The WGP may further include a grid layer including at least one from among a metal layer and a dielectric layer, wherein the light absorption layer may be provided on the grid layer.

The absorption layer may include at least one material from among AlAs, GaAs, InGaAs, GaP, InP, GaN, InN, CdTe, Ni-P, carbon nanotube, Ag2S, and Cr203.

The antireflection layer may include an embossed pattern in a scale of nano meters.

The antireflection layer may include at least one material from among silicone, UV-curable silicone, and photoresist.

The display apparatus may further include a color filter layer provided on one of the upper substrate and the lower substrate.

The WGP may include at least one from among a lower polarizer provided between the lower substrate and the liquid crystal layer and an upper polarizer provided between the liquid crystal layer and the upper substrate. The at least one from among the lower polarizer and the upper polarizer may have a pitch determined based on a wavelength of light of a color to be displayed by light filtered therethrough.

According to an aspect of still another exemplary embodiment, there is provided a wire grid polarizer including a grid layer including at least one of a metal layer and a dielectric layer and configured to filter light which passes therethrough and a light absorption layer provided on the at least one of the metal layer and the dielectric layer and configured to absorb light incident thereon.

### BRIEF DESCRIPTION OF THE DRAWINGS

The above and/or other aspects will become more apparent by describing certain exemplary embodiments, taken in conjunction with the accompanying drawings, in which:

FIG. 1 illustrates a display apparatus according to an exemplary embodiment;

FIG. 2 is an exploded perspective view of the display apparatus of FIG. 1;

FIG. 3 is a cross-sectional view illustrating a staked structure of elements of a display panel of the display apparatus of FIG. 2;

FIG. 4 is a schematic cross-sectional view illustrating a main part of an antireflection layer in the display panel of FIG. 3;

FIG. 5 is a perspective view illustrating a main part of a lower polarizing layer in the display panel of FIG. 3;

FIG. 6 is a lateral cross-sectional view illustrating configurations of the lower polarizing layer and an upper polarizing layer in the display panel of FIG. 3;

FIG. 7 is a cross-sectional view illustrating a stacked structure of elements of a display panel according to another exemplary embodiment;

FIG. 8 illustrates sub-pixels of each pixel in a liquid crystal layer of the display panel of FIG. 7;

FIG. 9 illustrates bars of a linear grid of an upper polarizing layer corresponding to the respective sub-pixels of FIG. 8; and

FIG. 10 is a block diagram illustrating a configuration of a display apparatus according to an exemplary embodiment.

### DETAILED DESCRIPTION

Certain exemplary embodiments are described in greater detail below with reference to the accompanying drawings.

In the following description, the same drawing reference numerals are used for the same elements even in different drawings. The matters defined in the description, such as detailed construction and elements, are provided to assist in a comprehensive understanding of exemplary embodiments. Thus, it is apparent that exemplary embodiments can be carried out without those specifically defined matters. Also, well-known functions or constructions are not described in detail since they would obscure exemplary embodiments with unnecessary detail.

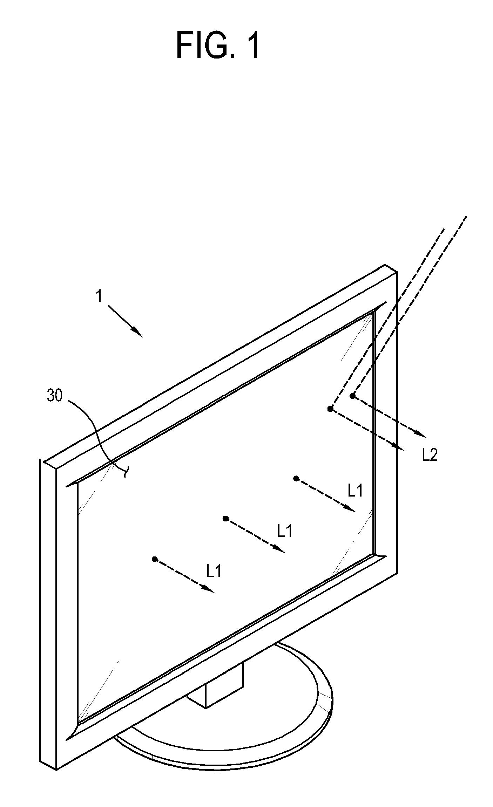

FIG. 1 illustrates a display apparatus 1 according to an exemplary embodiment.

The display apparatus 1 may process an image signal from an outside source and display an image based on the processed image signal. The display apparatus 1 shown in FIG. 1 may be a television (TV). However, the display apparatus 1 is not limited to a particular kind but may include any device having a display panel 30 that displays an image, for example, a TV, a monitor, a portable multimedia player, a mobile phone, or the like.

The display panel 30 may generate light for displaying an image or may be provided with light from a separate element. When the display panel 30 is an organic light emitting diode (OLED) panel, the display panel 30 generates light by itself to display an image. On the other hand, when the display panel 30 is a liquid crystal display (LCD) panel, the display panel 30 does not generate light but is provided with light generated by a backlight unit (not shown).

The display panel 30 allows a user to perceive an image displayed on a surface thereof when light L1 is emitted from the panel surface to an outside.

In an environment in which the display apparatus 1 is used, while the image is being displayed on the display panel 30, external light L2 reaches the surface of the display panel 30 on which the image is displayed. When the external light L2 is not absorbed at the surface of the display panel 30, the external light L2 is reflected on the display panel 30. Therefore, it may be difficult for the user to perceive the image displayed on the display panel 30 due to the reflected external light L2.

According to an exemplary embodiment, a structure for reducing reflection on the display panel 30 by the external light L2 is used to allow the user to clearly and readily perceive the image displayed on the display panel 30, which will be described in detail.

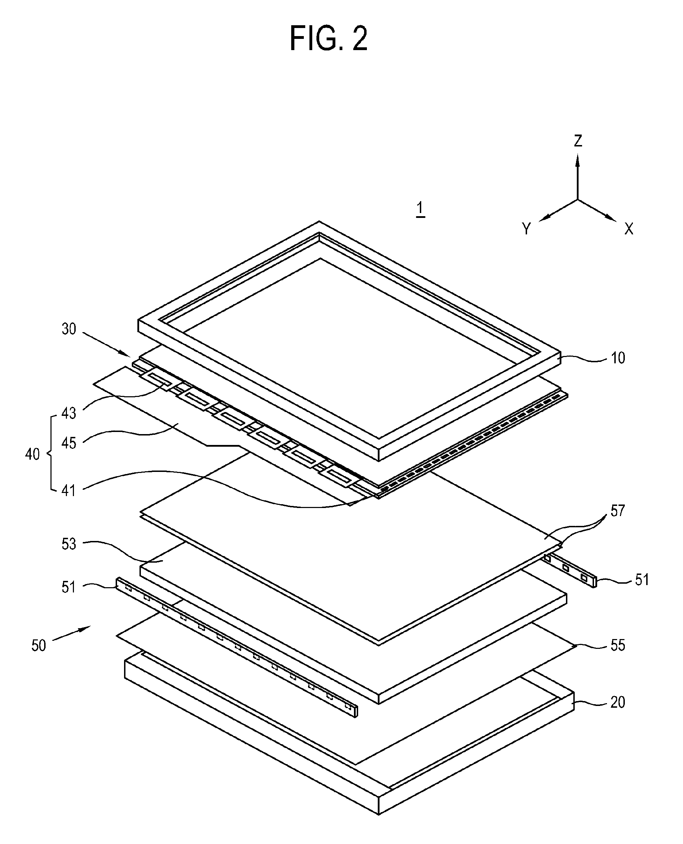

Hereinafter, a configuration of the display apparatus 1 will be described with reference to FIG. 2.

FIG. 2 is an exploded perspective view of the display apparatus 1. In this embodiment, the display apparatus 1 is described as including an LCD panel as the display panel 30.

As shown in FIG. 2, the display apparatus 1 includes covers 10 and 20 which provide an interior space therein, the display panel 30 which is accommodated in the interior space provided by the covers 10 and 20 and displays images on a surface thereof, a panel driving unit 40 which drives the display panel 30, and a backlight unit 50 which is accommodated in the interior space provided by the covers 10 and 20 to face a lower surface of the display panel 30 and provide light to the display panel 30.

Directions along X, Y, and Z axes as shown in FIG. 2 are defined as width, length, and height directions of the display panel 30, respectively. The display panel 30 is disposed on an X-Y plane, and the covers 10 and 20, the display panel 30 and the backlight unit 50 are arranged in a Z-axis.

Unless specifically defined, the terms "upper" and "above" and the terms "lower" and "under" are defined with respect to a Z axis direction. For example, the backlight unit 50 is disposed under the display panel 30, and light radiated from the backlight unit 50 enters the lower surface of the display panel 30 and exits through an upper surface of the display panel 30.

The covers 10 and 20 form an exterior appearance of the display apparatus 1 and support the display panel 30 and the backlight unit 40 which are accommodated therein. The covers 10 and 20 include a front cover 10 which supports a front side of the display panel 30 and a rear cover 20 which supports a rear side of the backlight unit 50, respectively. The front cover 10 and the rear cover 20 may be arranged along the Z-axis direction. The front cover 10 has an opening formed on an upper surface thereof parallel with the X-Y plane to expose an image display area of the display panel 30 therethrough.

The display panel 30 may be configured as an LCD panel. The display panel 30 may be formed of two substrates (not shown) and a liquid crystal layer (not shown) interposed therebetween and may displays images on a surface thereof by adjusting an arrangement of liquid crystals in the liquid crystal layer (not shown) through driving signals applied thereto. The display panel 30 does not emit light by itself and thus is provided with light from the backlight unit 50 to display images in the image display area thereof.

The panel driving unit 40 applies a driving signal for driving the liquid crystal layer to the display panel 30. The panel driving unit 40 includes a gate drive integrated circuit (IC) 41, a data chip film package 43, and a printed circuit board (PCB) 45.

The gate drive IC 41 is formed to be integrated on a substrate (not shown) of the display panel 30 and is connected to each gate line (not shown) on the display panel 30. The data chip film package 43 is connected to each data line (not shown) on the display panel 30. Here, the data chip film package 43 may include a wiring pattern, obtained by forming semiconductor chips on a base film thereof, and a tape automated bonding (TAB) tape bonded by a TAB technique. The data chip film package 43 may include, for example, a tape carrier package (TCP) or a chip on film (COF). Meanwhile, the PCB 45 inputs a gate drive signal to the gate drive IC 41 and inputs a data drive signal to the data chip film package 43.

With this configuration, the panel driving unit 40 inputs drive signals to each gate line (not shown) and each data line (not shown) on the display panel 30, respectively, to drive the liquid crystal layer (not shown) in a unit of a pixel.

The backlight unit 50 may be disposed under the display panel 30, that is, in the -Z direction of the display panel 30, to provide light to the lower surface of the display panel 30. The backlight unit 50 includes a light source unit 51 disposed at a side portion of the display panel 30, a light guide plate 53 disposed parallel with the display panel 30 to face the lower surface of the display panel 30, a reflection plate 55 disposed under the light guide plate 53 to face a lower surface of the light guide plate 53, and at least one optical sheet 57 disposed between the display panel 30 and the light guide plate 53.

In this embodiment, an edge-type backlight unit 50 is illustrated in which the light source unit 51 is disposed at a side portion of the light guide plate 53 and a light emitting direction of the light source unit 51 and a light exiting direction of the light guide plate 53 may be substantially perpendicular to each other. However, a structure of the backlight unit 50 may be variously changed or modified in design, without being limited thereto. For example, in an alternative embodiment, a direct-type backlight unit 50 may be used in which the light source unit 51 is disposed under the light guide plate 53 and the light emitting direction of the light source unit 51 and the light exiting direction of the light guide plate 53 are substantially parallel with each other.

The light source unit 51 generates light and radiates the generated light to enter the light guide plate 53. The light source unit 51 extends in a direction substantially perpendicular to the surface of the display panel 30, that is, the z-direction substantially perpendicular to the X-Y plane and is disposed along at least one of four edges of the display panel 30 or the light guide plate 53. The light source unit 51 includes light emitting elements (not shown) which may include, for example, light emitting diodes (LEDs) sequentially disposed on a module substrate (not shown).

The light guide plate 53, which includes a plastic lens including acrylic materials, is used to substantially uniformly transmit light incident from the light source unit 51 to the image display area of the display panel 30. A lower side of the light guide plate 53 faces the reflection plate 55. Further, among at least four side walls formed between an upper side and the lower side of the light guide plate 53, side walls extending in a direction, e.g., the X direction faces the light source unit 51. Light radiated from the light source unit 51 enters the side walls in a direction, e.g., the Y direction.

The light guide plate 53 may include various optical patterns (not shown) formed on the lower side thereof to diffuse and/or reflect light proceeding in the light guide plate 53 or change a traveling direction of the light. Accordingly, light exiting from the light guide plate 53 may be substantially uniformly distributed.

The reflection plate 55 under the light guide plate 53 reflects light exiting from the light guide plate 53 toward the outside, thus directs the light back toward the light guide plate 53. The reflection plate 55 reflects light not reflected by the optical patterns (not shown) formed on the lower side of the light guide plate 53 back into the light guide plate 53. To this end, an upper surface of the reflection plate 55 may have total reflection characteristics.

The at least one optical sheet 57 is stacked on the light guide plate 53 to adjust characteristics of light exiting from the light guide plate 53. The at least one optical sheet 57 may include a diffusion sheet (not shown), a prism sheet (not shown), or a protection sheet (not shown), wherein two or more sheets thereamong may be stacked in combination to obtain desired light characteristics.

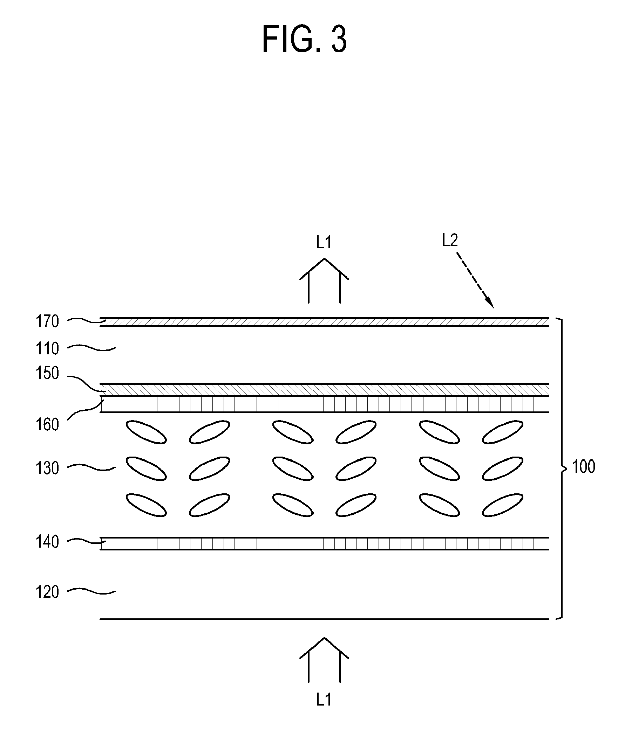

FIG. 3 is a cross-sectional view illustrating that elements of a display panel 100 are stacked. The display panel 100 of FIG. 3 has a configuration substantially the same as the display panel 30 illustrated in FIGS. 1 and 2 and thus may be applied to the display apparatus 1 of FIG. 1.

As shown in FIG. 3, light L1 radiated from the backlight unit 50, as shown in FIG. 2, enters through a first side of the display panel 100 and exits through a second side of the display panel 100 via various elements of the display panel 100. In the following description, spatially relative terms, such as "upper", "above", "lower" and "under" may be used herein for ease of description to describe the relationship of one element or feature to another element(s) or feature(s) in arrangement or deposition based on a direction in which the light L1 proceeds.

The display panel 100 includes an upper substrate 110, a lower substrate 120 disposed to face the upper substrate 110, a liquid crystal layer 130 disposed between the upper substrate 110 and the lower substrate 120, a lower polarizing layer 140 disposed between the liquid crystal layer 130 and the lower substrate 120, an upper polarizing layer 150 disposed between the liquid crystal layer 130 and the upper substrate 110, a color filter layer 160 disposed between the liquid crystal layer 130 and the upper polarizing layer 150, and an antireflection layer 170 disposed on the upper substrate 110.

Hereinafter, the elements of the display panel 100 will be described in detail.

The upper substrate 110 and the lower substrate 120 may be transparent substrates disposed at a predetermined interval from each other to face each other. The upper substrate 110 and the lower substrate 120 may be a glass or plastic substrate. In case of a plastic substrate, the upper substrate 110 and the lower substrate 120 may include, for example, polycarbonate, polyimide (PI), polyethersulphone (PES), polyacrylate (PAR), polyethylenenaphthelate (PEN), or polyethyleneterephehalate (PET).

The upper substrate 110 and the lower substrate 120 may have different characteristics based on a drive method of the liquid crystal layer 130. For example, in a passive-matrix liquid crystal layer 130, the upper substrate 110 and the lower substrate 120 may include, for example, soda lime glass. In an active-matrix liquid crystal layer 130, the upper substrate 110 and the lower substrate 120 may include, for example, alkali free glass or borosilicate glass.

The liquid crystal layer 130 is disposed between the upper substrate 110 and the lower substrate 120 and adjusts light transmittance thereof according to a change in arrangement of the liquid crystals in the liquid crystal layer 130 based on an applied driving signal. A liquid generally includes molecules with irregular orientation and arrangement, while liquid crystals are in a state between a liquid phase and a solid phase and have regularity in orientation and arrangement to a certain extent. For example, a solid when heated and melted and thus becomes a liquid phase exhibits anisotropic properties such as birefringence. A liquid crystal has properties of both liquid and solid crystal, for example, a crystal-like property such as regularity and a liquid-like phase. Thus, liquid crystals have optical properties such as birefringence or color change. When voltage is applied to the liquid crystals, an arrangement of the molecules of the liquid crystals is changed and optical properties of the liquid crystals are also changed accordingly.

The liquid crystals in the liquid crystal layer 130 may be, for example, nematic, cholesteric, smectice, and ferroelectric liquid crystals based on an arrangement of the molecules.

The lower polarizing layer 140 is formed on a light exiting surface of the lower substrate 120. The lower polarizing layer 140 transmits only light in a first polarizing direction (or a first polarized component) of the radiated light L1 and reflects a component other than the first polarized component.

The upper polarizing layer 150 is formed on a light entering surface of the upper substrate 110. The upper polarizing layer 150 transmits only light in a second polarizing direction (or a second polarized component) of the radiated light via the lower substrate 120, the lower polarizing layer 140, and the liquid crystal layer 130 and reflects a component other than the second polarized component.

Here, the second polarizing direction may be different from the first polarizing direction. For example, the second polarizing direction may be substantially perpendicular to the first polarizing direction. This is because a polarizing direction of the radiated light is rotated about 90 degrees by the liquid crystal layer 130 when the radiated light passes through the liquid crystal layer 130. In other words, the radiated light in the first polarizing direction via the lower polarizing layer 140 is adjusted to the second polarizing direction when passing through the liquid crystal layer 130. Therefore, the radiated light adjusted to the second polarizing direction may pass through the upper polarizing layer 150.

The upper polarizing layer 150 and the lower polarizing layer 140 may include a linear grid (not shown) of bars extending in a predetermined direction from the upper substrate 110 and the lower substrate 120, respectively. For example, the upper polarizing layer 150 and the lower polarizing layer 140 may be a wire grid polarizer (WGP). In the linear grid, the bars may be arranged at a preset interval with a pitch (not shown) and the extending direction thereof may correspond to the second and the first polarizing directions, respectively. The upper polarizing layer 150 and the lower polarizing layer 140 will be described in detail later.

The color filter layer 160 filters incident light so that light having a predetermined color is emitted with respect to each pixel of the liquid crystal layer 130.

For example, the color filter layer 160 converts light entering the display panel 100 into red, green, and blue (RGB) colors. A pixel of the liquid crystal layer 130 includes sub-pixels corresponding to the RGB colors, respectively, and the color filter layer 160 performs filtering by color with respect to each sub-pixel. Thus, light of different colors by sub-pixels is emitted from the color filter layer 160. In this embodiment, the color filter layer 160 is disposed closer to the upper substrate 110, without being limited thereto. Alternatively, the color filter layer 160 may be disposed closer to the lower substrate 120.

The antireflection layer 170 is formed on an upper surface of the upper substrate 110 to substantially prevent external light L2 from an external environment from being reflected on the surface of the display panel 100.

According to a related art, an antiglare film or an antireflection film is stacked on a top of a display panel to prevent reflection of the external light L2 on the surface of the display panel. The display panel according to the related art has a structure in which the polarizing layers 140 and 150 are stacked on an upper side of the upper substrate 110 and a lower side of the lower substrate 120, respectively, unlike in the display panel 100 according to the exemplary embodiment as shown in FIG. 3. Thus, in the related art, the antiglare film or the antireflection film is not directly stacked or formed on the upper substrate 110 but is stacked on the polarizing layer 150.

The antiglare film has a structure such that the external light L2 is reflected in a random direction on a surface thereof to scatter the external light L2 to substantially prevent the reflected light from being transmitted to eyes of a user. The antiglare film may have a specular reflectance of about 2.0 % to about 2.5% and is applied to a large-screen display panel.

Meanwhile, the antireflection film is formed by depositing a plurality of materials having different refractive indices in a multilayer structure to substantially prevent reflection of the external light L2 on a surface between respective coating layers by using a change in refractive index. Thus, the antireflection film substantially prevents reflection of the external light L2 and shows a specular reflectance of about 0.1 to about 1.0%. However, the antireflection film may not be easily applied to a large-screen display panel due to a higher cost and difficulties in manufacturing.

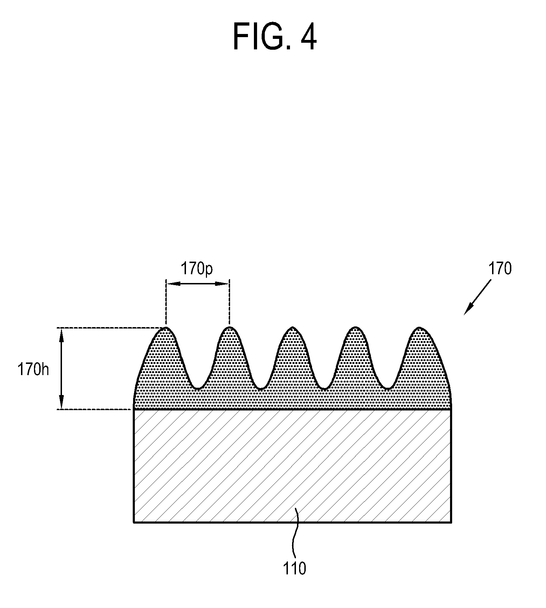

Thus, the display panel 100 according to an exemplary embodiment adopts the antireflection layer 170 with a structure illustrated in FIG. 4.

FIG. 4 is a schematic cross-sectional view illustrating a main part of an antireflection layer 170 according to an exemplary embodiment.

As shown in FIG. 4, the antireflection layer 170 includes an embossed pattern distributed and formed on a surface of the upper substrate 110 of the display panel 100, particularly an upper surface of the upper substrate 110 from which radiated light exits. The antireflection layer 170 may be a nanoscale structure of several dozens to several hundreds of nanometers, which includes, for example, silicone, ultraviolet (UV)-curable silicone, or photoresist.

The embossed pattern of the antireflection layer 170 may have various upwardly protruding shapes of cross sections, for example, substantially rectangular, substantially parabolic, or substantially dome shapes.

The antireflection layer 170 may have a ratio of a pitch 170p between the patterns to a height 170h of the pattern of about 1:2. For example, when the pitch 170p is about 100 nm, the height 170h is about 200 nm.

The antireflection layer 170 may substantially prevent external light from being reflected on the surface of the display panel 100 and allow external light to be transmitted to the display panel 100. Here, when an air has a refractive index of about 1 and the upper substrate 110 comprising, for example, a glass material has a refractive index of about 1.52, the antireflection layer 170 allows the refractive index gradually changes from about 1 to about 1.52 while the external light passes from the air to the upper substrate 110 through the antireflection layer 170.

Accordingly, reflectance of the external light on the display panel 100 may be reduced to about 1% or less.

In addition to the foregoing example, various structures may be used for the antireflection layer 170 to decrease the reflectance of external light. For instance, the antireflection layer 170 may substantially prevent reflection of external light absorbing the external light, instead of transmitting the external light to the display panel 100.

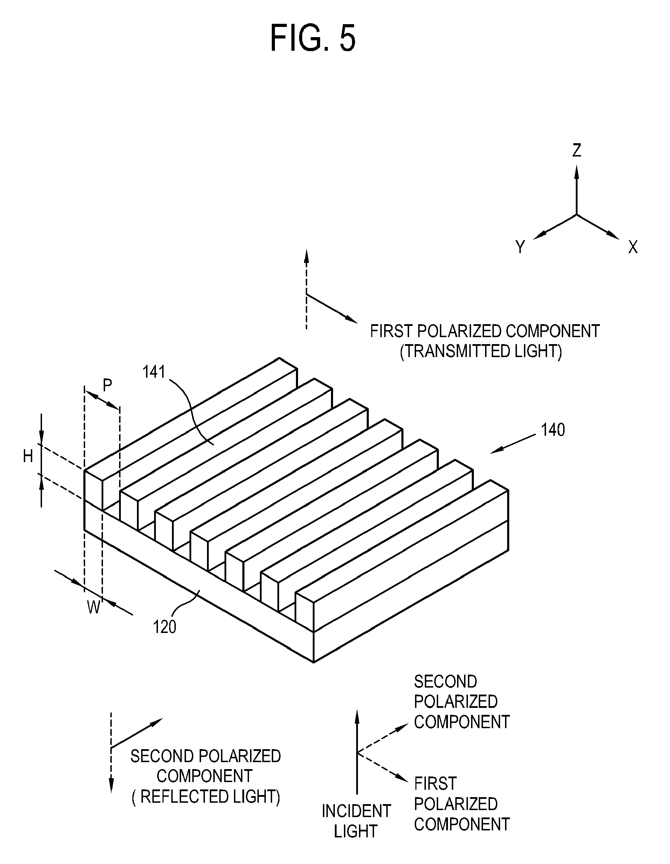

Hereinafter, an example of a structure of the lower polarizing layer 140 will be described with reference to FIG. 5.

FIG. 5 is a perspective view illustrating a main part of the lower polarizing layer 140.

As shown in FIG. 5, the lower polarizing layer 140 includes a linear grid of bars 141, extending in a particular direction, for example, the Y direction, and disposed on the lower substrate 120. The linear grid of the bars 141 may be a wire grid polarizer. The bars 141 may have a preset height H, width W, and pitch P and are arranged at regular intervals.

When the pitch P of the bars 141 is adjusted to 1/2 of a wavelength of light, light may be transmitted or reflected, and thus, diffracted waves may not be generated. A slit is formed between two adjacent bars 141, and while incident light passes through the slit, a first polarized component in a first polarizing direction, substantially perpendicular to the direction in which the bars 141 extend, passes through the lower polarizing layer 140. On the other hand, a second polarized component in a second polarizing direction, substantially parallel with the direction in which the bars 141 extend, is reflected. That is, due to the above described structure of the linear grid of the bars 141, light passing through the lower polarizing layer 140 is polarized and filtered in the first polarizing direction.

The reflected light, which does not pass through the lower polarizing layer 140, is reflected by the reflection plate 55 (see FIG. 1) to be directed back to the display panel 100. That is, the light which does not pass through but is filtered by the lower polarizing layer 140 may be reused to improve overall display efficiency of the display apparatus without using related art dual brightness enhancement film (DBEF).

The lower polarizing layer 140 may be formed by depositing a metal layer on the lower substrate 120 and patterning the linear grid 141 by nanoimprint lithography (NIL). Polarized light of incident light is reflected by the lower polarizing layer 140 when the polarized light is substantially parallel with the linear grid 141, but is transmitted when the polarized light is substantially perpendicular to the linear grid 141.

To improve polarizing and filtering properties of the lower polarizing layer 140, an aspect ratio, i.e., a ratio of the width W of the linear grid 141 to the height H thereof may be about 1:3 or higher. For example, when the pitch P is in a range from about 100 to about 150 nm, the width W is in a range from about 50 to about 75 nm, and the height H is about 150 nm, the polarizing and filtering properties may be improved.

The upper polarizing layer 150 may have a linear grid having a structure similar to that of the lower polarizing layer 140. Here, the linear grid (not shown) of the upper polarizing layer 150 may extend in a substantially perpendicular direction to the linear grid 141 of the lower polarizing layer 140. For example, when the linear grid 141 of the lower polarizing layer 140 extends in the Y direction, the linear grid of the upper polarizing layer 150 may extend in the X direction perpendicular to the Y direction. Accordingly, the upper polarizing layer 150 transmits only the second polarized component and does not transmit the first polarized component.

Here, the linear grids of the lower polarizing layer 140 and the upper polarizing layer 150 respectively include a metal layer which reflects light. That is, due to the metal layers of the linear grids of the lower and upper polarizing layers 140 and 150, external light incident through the upper substrate 110 may be reflected and exit from the display panel 100. In this case, efficiency in preventing reflection of the external light by the antireflection layer 170 may be reduced.

Thus, according to an exemplary embodiment, the linear grids of the lower polarizing layer 140 and the upper polarizing layer 150 may respectively include a grid layer including at least one of a metal layer and a dielectric layer and a light absorption layer for absorbing external light incident from the outside through the antireflection layer 170.

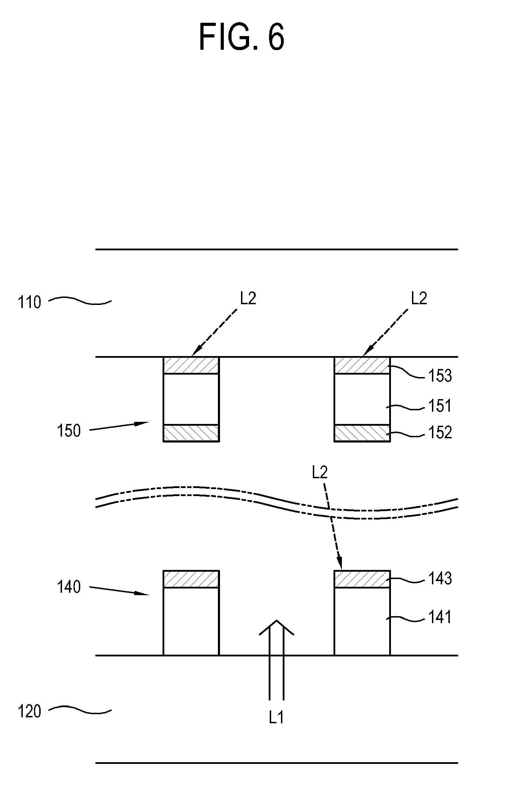

FIG. 6 is a lateral cross-sectional view illustrating configurations of the lower polarizing layer 140 and the upper polarizing layer 150.

As shown in FIG. 6, the upper polarizing layer 150 includes a light absorption layer 153, a metal layer 151, and a dielectric layer 152 stacked on a lower surface of the upper substrate 110 in a proceeding direction of radiated light L1. Similarly, the lower polarizing layer 140 includes a metal layer 141 (i.e., the linear grid) and a light absorption layer 143 stacked on the lower substrate 120.

In an exemplary embodiment, the lower polarizing layer 140 includes the metal layer 141, and the upper polarizing layer 150 includes the metal layer 151 and the dielectric layer 152. However, the lower polarizing layer 140 and the upper polarizing layer 150 are not limited thereto. For example, the lower polarizing layer 140 and the upper polarizing layer 150 may include at least one of the metal layer and the dielectric layer.

The lower polarizing layer 140 and the upper polarizing layer 150 may perform polarizing and filtering of light only when the linear grid has the above described structure. However, to enhance efficiency in polarizing and filtering of light, the lower polarizing layer 140 and the upper polarizing layer 150 may respectively include the metal layer 141 and 151 including materials with improved reflectance, such as, for example, aluminum (A1), copper (Cu), or silver (Ag). The metal layers 141 and 151 may include alloy materials with reinforced rigidity such as molybdenum-tungsten (MoW) or a conductive polymer.

The polarizing and filtering properties of the metal layers 141 and 151 may be improved by plasmon resonance that is collective oscillation of free electrons on a surface of a nanoscale metal. A detailed description thereof is omitted here.

The dielectric layer 152 protects the metal layer 151 and may generate surface plasmon waves by the plasmon resonance along with the metal layer 151, thereby enhancing polarizing-filtering properties thereof. The dielectric layer 152 may include, for example, silicon oxides.

The light absorption layers 143 and 153 are disposed above the grid layers including the metal layers 141, 151, respectively, in the proceeding direction of the radiated light L1. When the light absorption layers 143 and 153 are not provided, incident external light L2 may be reflected by the metal layers 141 and 151 to exit toward the outside of the display panel 100. Thus, the light absorption layers 143 and 153 may be provided on the metal layers 141 and 151 to substantially prevent reflection of the external light L2 incident thereon.

The light absorption layers 143 and 153 may include at least one of AlAs, GaAs, InGaAs, GaP, InP, GaN, InN, CdTe, Ni-P, carbon nanotube, Ag2S, and Cr203. Alternatively, the light absorption layers 143 and 153 may include a black paint material.

Here, the light absorption layers 143 and 153 may substantially absorb the external light L2 passing through the upper substrate 110 by the antireflection layer 170, thereby substantially preventing reflection of the external light L2 and improving quality of an image displayed on the display panel 100.

Although it is described in this embodiment that the light absorption layers 143 and 153 are formed on the lower polarizing layer 140 and the upper polarizing layer 150, respectively, it should be noted that exemplary embodiments are not limited thereto. For example, at least one of the light absorption layer 143 and 153 may be formed on the lower polarizing layer 140 and the upper polarizing layer 150.

Although it is described in this embodiment that the display panel 100 includes the color filter layer 160, it should be noted that the color filter layer 160 may not be provided in the display panel 100. For example, the lower polarizing layer 140 or the upper polarizing layer 150 may serve as the color filter layer 160 to filter radiated light to emit light corresponding to RGB colors.

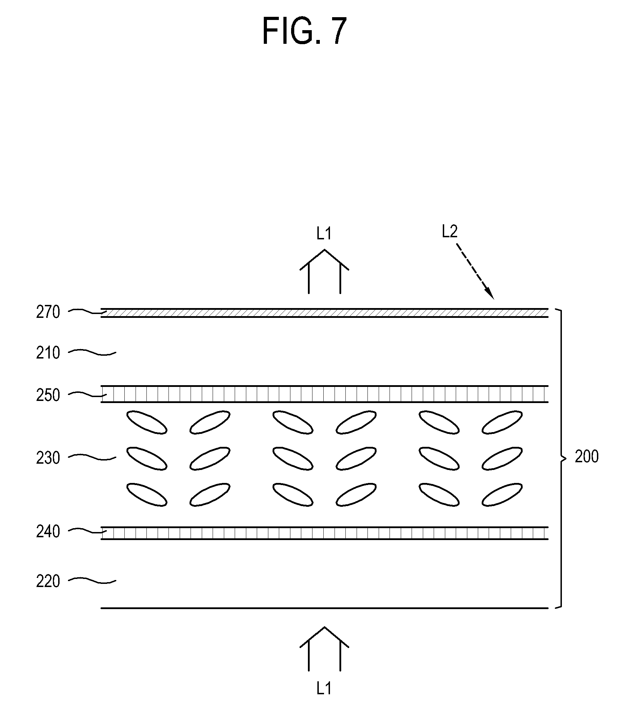

FIG. 7 is a cross-sectional view illustrating a stacked structure of elements of a display panel 200 according to another exemplary embodiment.

As shown in FIG. 7, the display panel 200 according to another exemplary embodiment includes an upper substrate 210, a lower substrate 220, a liquid crystal layer 230, a lower polarizing layer 240, an upper polarizing layer 250, and an antireflection layer 270. The upper substrate 210, the lower substrate 220, the liquid crystal layer 230, and the antireflection layer 270 have configurations substantially the same as equivalent elements illustrated in the exemplary embodiment of FIG. 3, and thus detailed descriptions thereof will be omitted here.

In the display panel 200 according to this embodiment, at least one of the lower polarizing plate 240 and the upper polarizing layer 250 performs color filtering on incident light. For example, the upper polarizing layer 250 may perform polarizing and filtering as well as color filtering. In this case, the lower polarizing layer 240 may have a configuration substantially the same as that in the exemplary embodiment of FIG. 3.

Hereinafter, a configuration of the upper polarizing layer 250 which performs polarizing and filtering as well as color filtering will be described in detail.

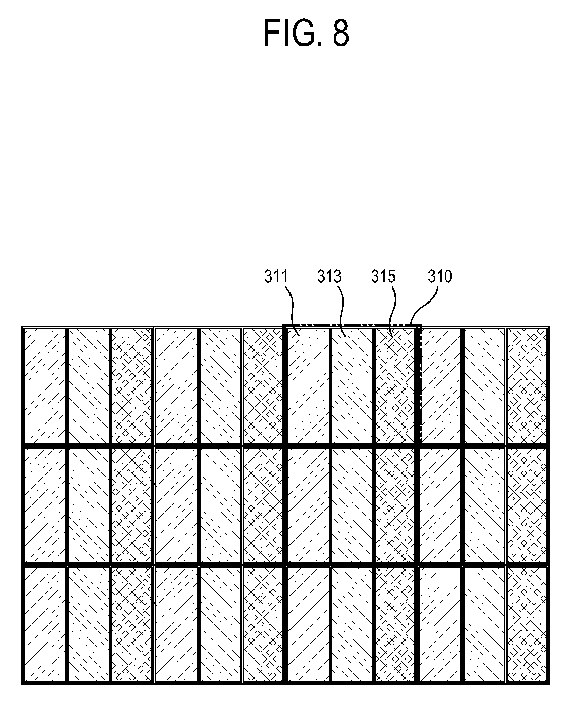

FIG. 8 illustrates sub-pixels by colors 311, 313, and 315 of each pixel 310 in the liquid crystal layer 230.

As shown in FIG. 8, a pixel 310 includes three sub-pixels 311, 313, and 315 respectively corresponding to three RGB colors. That is, the pixel 310 includes a red sub-pixel 311 corresponding to a red light emitting region, a green sub-pixel 313 corresponding to a green light emitting region, and a blue sub-pixel 315 corresponding to a blue light emitting region.

The upper polarizing layer 250 has a structure of a linear grid similar to that of the lower polarizing layer 240 except that the linear grid of the upper polarizing layer 250 has different pitches corresponding to the respective sub-pixels 311, 313, and 315 while the grid linear of the lower polarizing layer 240 has a substantially uniform pitch.

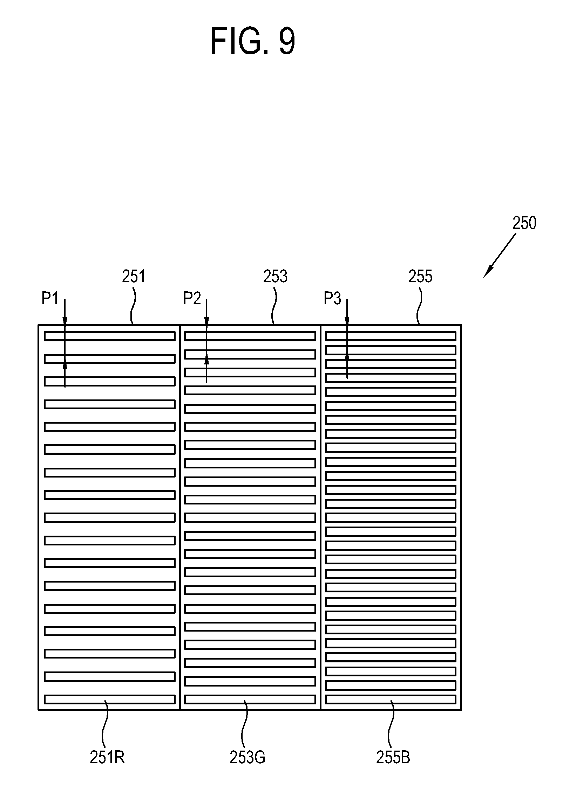

FIG. 9 illustrates bars 251R, 253G, and 255B of the linear grid of the upper polarizing layer 250 corresponding to the respective sub-pixels 311, 313, and 315.

As shown in FIG. 9, the upper polarizing layer 250 includes red bars 251R formed in a region 251 corresponding to the red sub-pixel 311, green bars 253G formed in a region 253 corresponding to the green sub-pixel 313, and blue bars 255B formed in a region 255 corresponding to the blue sub-pixel 315.

Respective pitches P1, P2, or P3 between the bars 251R, 253G, or 255B according to each color are set to have an interval. For example, a pitch P1 between the red bars 251R may be smaller than 1/2 of a wavelength of red light, a pitch P2 between the green bars 253G may be smaller than 1/2 of a wavelength of green light, and a pitch P3 between the blue bars 255B may be smaller than 1/2 of a wavelength of blue light.

The pitch P1 between the red bars 251R may be about 330 to about 390 nm, which is smaller than 1/2 of the wavelength of the red light, and incident light may have a preset polarized component corresponding to the red light while passing through the red bars 251R. The pitch P2 between the green bars 253G may be about 250 to about 290 nm, and the pitch P3 between the blue bars 255B may be about 220 to about 240 nm. These values are provided for illustrative purposes only and not for limiting the disclosure.

Thus, the pitches of the bars 251R, 253G, and 255B corresponding to the sub-pixels 311, 313, and 315 may be set to different values to adjust a wavelength of incident light, thereby emitting light of different colors corresponding to the sub-pixels 311, 313, and 315.

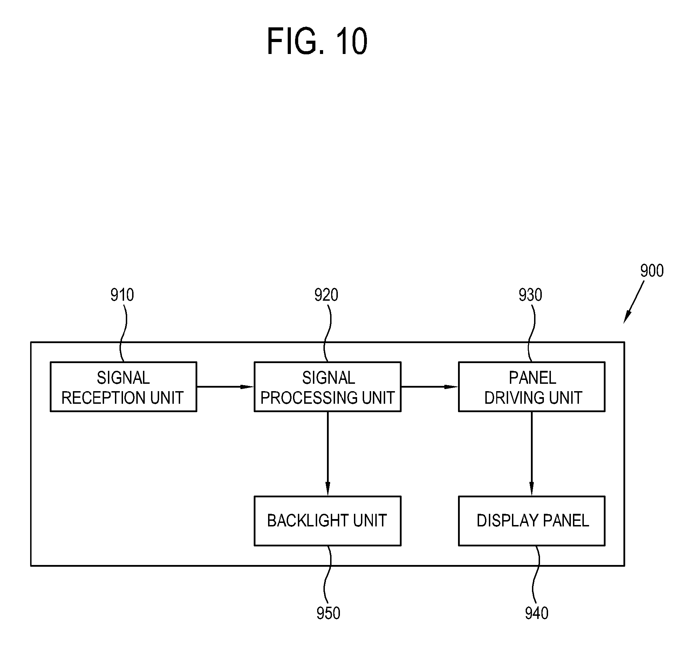

Hereinafter, a configuration of a display apparatus according to an exemplary embodiment will be described with reference to FIG. 10.

FIG. 10 is a block diagram illustrating a configuration of a display apparatus 900 according to an exemplary embodiment.

As shown in FIG. 10, the display apparatus 900 includes a signal reception unit 910 which receives an image signal, a signal processing unit 920 which processes the image signal received from the signal reception unit 910 according to a preset image processing, a panel driving unit 930 which outputs a driving signal corresponding to the image signal processed by the signal processing unit 920, a display panel 940 which displays an image based on the image signal in accordance with the driving signal from the panel driving unit 930, and a backlight unit 950 which provides light to the display panel 940 corresponding to the image signal processed by the signal processing unit 920.

In an exemplary embodiment, the display apparatus 900 may be various devices capable of displaying images such as, for example, a TV, a monitor, a portable media player, and a mobile phone.

The signal reception unit 910 receives an image signal or image data and transmits the image signal or image data to the signal processing unit 920. The signal reception unit 910 may be configured in various types based on standards of received image signals and/or configurations of the display apparatus 900. For example, the signal reception unit 910 may receive a radio frequency (RF) signal wirelessly transmitted from a broadcasting station (not shown) or various image signals, via a cable, in accordance with a composite video, a component video, a super video, Syndicat des Constructeurs d'Appareils Radiorécepteurs et Téléviseurs (SCART), high definition multimedia interface (HDMI), DisplayPort, unified display interface (UDI) or wireless HD standards. When the image signal is a broadcast signal, the signal reception 910 may include a tuner to tune to a broadcast signal of each channel. Alternatively, the signal reception unit 910 may receive an image data packet from a server (not shown) through a network.

The signal processing unit 920 performs various image processing processes on the image signal received by the signal reception unit 910. The signal processing unit 920 outputs a processed image signal to the panel driving unit 930 to display an image based on the image signal on the display panel 940.

The signal processing unit 920 may perform image processing including, without being limited to, for example, decoding corresponding to an image format of image data, de-interlacing to convert interlaced image data into a progressive form, scaling to adjust image data to a preset resolution, noise reduction to improve image quality, detail enhancement, frame refresh rate conversion, or the like.

The signal processing unit 920 may be configured as an integrated multifunctional component such as, for example, a system on chip (SOC) or an image processing board (not shown) formed by mounting separate components which independently perform respective processes on a printed circuit board and be embedded in the display apparatus 900.

The panel driving unit 930, the display panel 940, and the backlight unit 950 may have configurations substantially the same as those in the aforementioned embodiments, and thus detailed descriptions thereof are omitted herein.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display panel of a display apparatus comprising the display panel and a backlight unit providing light to the display panel, the display panel comprising:
an upper substrate;
a lower substrate disposed to face the upper substrate;
a liquid crystal layer disposed between the upper substrate and the lower substrate;
a wire grid polarizer (WGP) formed on either the lower substrate or the upper substrate, and polarizing-filtering light radiated from the backlight unit; and
an antireflection layer formed on a light exiting surface of the upper substrate and preventing reflection of external light from an external environment,
wherein the WGP comprises a light absorption layer absorbing the external light incident through the antireflection layer.

2. The display panel of claim 1, wherein the WGP further comprises a grid layer comprising at least one of a metal layer and a dielectric layer, wherein the light absorption layer is disposed on the grid layer in a proceeding direction of the external light.

3. The display panel of claim 1, wherein the absorption layer comprises at least one material of AlAs, GaAs, InGaAs, GaP, InP, GaN, InN, CdTe, Ni-P, carbon nanotube, Ag2S, and Cr203.

4. The display panel of claim 1, wherein the antireflection layer comprises a nanoscale embossed pattern distributed on the light exiting surface of the upper substrate.

5. The display panel of claim 4, wherein the antireflection layer comprises a pattern in at least one material of silicone, UV-curable silicone, and photoresist.

6. The display panel of claim 1, further comprising a color filter layer deposited on a light entering surface of the upper substrate or the lower substrate.

7. The display panel of claim 1, wherein each pixel of the liquid crystal layer comprises a plurality of sub-pixels respectively corresponding to a plurality of colors,
the WGP comprises a lower polarizer disposed between the lower substrate and the liquid crystal layer, and an upper polarizer disposed between the liquid crystal layer and the upper substrate,
any one of the lower polarizer and the upper polarizer has a pitch set corresponding to a wavelength of light of each color so that the light of the color is emitted with respect to each of the sub-pixels.

8. A display apparatus comprising:
a signal reception unit receiving an image signal;
a signal processing unit processing the image signal received by the signal reception unit according to a preset image processing process;
a display panel displaying an image based on the image signal processed by the signal processing unit; and
a backlight unit generating and providing light so that the image is displayed on the display panel,
wherein the display panel comprises:
an upper substrate;
a lower substrate disposed to face the upper substrate;
a liquid crystal layer disposed between the upper substrate and the lower substrate;
a wire grid polarizer (WGP) formed on either the lower substrate or the upper substrate, and polarizing-filtering light radiated from the backlight unit; and
an antireflection layer formed on a light exiting surface of the upper substrate and preventing reflection of external light from an external environment,
wherein the WGP comprises a light absorption layer absorbing the external light incident through the antireflection layer.

9. The display apparatus of claim 8, wherein the WGP further comprises a grid layer comprising at least one of a metal layer and a dielectric layer, wherein the light absorption layer is disposed on the grid layer in a proceeding direction of the external light.

10. The display apparatus of claim 8, wherein the absorption layer comprises at least one material of AlAs, GaAs, InGaAs, GaP, InP, GaN, InN, CdTe, Ni-P, carbon nanotube, Ag2S, and Cr203.

11. The display apparatus of claim 8, wherein the antireflection layer comprises a nanoscale embossed pattern distributed on the light exiting surface of the upper substrate.

12. The display apparatus of claim 11, wherein the antireflection layer comprises a pattern in at least one material of silicone, UV-curable silicone, and photoresist.

13. The display apparatus of claim 8, further comprising a color filter layer deposited on a light entering surface of the upper substrate or the lower substrate.

14. The display apparatus of claim 8, wherein each pixel of the liquid crystal layer comprises a plurality of sub-pixels respectively corresponding to a plurality of colors,
the WGP comprises a lower polarizer disposed between the lower substrate and the liquid crystal layer, and an upper polarizer disposed between the liquid crystal layer and the upper substrate,
any one of the lower polarizer and the upper polarizer has a pitch set corresponding to a wavelength of light of each color so that the light of the color is emitted with respect to each of the sub-pixels.
